# EUROPEAN PATENT APPLICATION

(11) **EP 4 282 843 A1**
(43) Date of publication of application: **29.11.2023**
(21) Application number: 23174899.7
(22) Date of filing: 23.05.2023
(51) Int. Cl.: C04B 28/04, C04B 18/08

(54) **METHOD OF PREPARING COMPOSITE MATERIAL BONDED WITH HYDRAULIC BINDER AND FRESH COMPOSITE MATERIAL BONDED WITH HYDRAULIC BINDER AND CONTAINING RECYCLED AGGREGATE**

(30) Priority: 26.05.2022 CZ 20220219
(71) Applicant: Red-Beton s.r.o., 64300 Brno (CZ)
(72) Inventor: Duchon, Miroslav, 64300 Brno (CZ); Kyvala, Miroslav, 69601 Rohatec (CZ)
(74) Representative: Zemanová, Veronika

(57) **Abstract**

Method of preparing a composite material bonded with hydraulic binder, wherein:
a) aggregate is prepared in an amount of at least 45 wt. % of the total weight of the - to be prepared - fresh composite material bonded with hydraulic binder, wherein this aggregate contains recycled aggregate from inert construction and demolition waste,
b) an active ingredient is added in an amount of 2 to 15 wt. %, the active ingredient containing 40 to 60 wt. % of high-temperature fly ash and 60 to 40 wt. % of low-temperature fluid ash, wherein the sum of the content of high-temperature ash and low-temperature ash in the active ingredient is at least. 85 wt. %,
and cement is added in an amount of 4 to 25 wt. % of the total weight of the - to be prepared - fresh composite material bonded with hydraulic binder,
c) then the produced mixture is being mixed for a period of 5 to 150 s,
d) then water in an amount of 5 to 20 wt. % of the total weight of the fresh composite material bonded with hydraulic binder is added to the mixture,
e) then the mixture produced in this way is being mixed for a period of 5 to 150 s.

## Description

### Field of the Art

The invention relates to a method of preparing a composite material bonded with hydraulic binder, containing recycled aggregate produced form inert construction and demolition waste. The invention also relates to a composite material prepared in this way, bonded by a hydraulic binder, wherein the production of composite material saves non-renewable resources of virgin aggregate so far commonly used for production of composite materials bonded by a hydraulic binder. Instead inert construction waste is used, for which a more efficient use does not yet exist and which, for the most part, is being deposited on landfills.

### Background Art

The standard CSN EN 206+A1 Concrete - Specifications, properties, production and compliance states the in the production of concrete coarse recycled aggregate produced form inert construction and demolition waste can be used depending on the degree of environmental effect of the resulting concrete and on the type of the recycled aggregate. The maximum amount that can be used for a concrete having an environmental effect degree of X0 is 50 % of coarse recycled aggregate (d > 4 mm) type A as well as B. For environmental effect degrees of XC1 and XC2, it is possible to use a maximum amount of 30 % of coarse recycled aggregate type A or 20 % of coarse recycled aggregate type B, while for the environmental effect degrees XC3, XC4, XF1, XA1 a XD1 it is possible to use only 30 % of coarse recycled aggregate type A. The recycled aggregate produced from construction and demolition waste is therefore only scarcely used for the production of composite materials bonded with hydraulic binder.

More than 7.5 million tons of inert construction and demolition waste is produced yearly in the Czech Republic only and more than 850 million tons of inert construction and demolition waste is produced yearly in the EU as a whole. We assume that the composite materials and mixtures of aggregates bonded with hydraulic binders produced from this inert construction and demolition waste could cover up to 15 % of their total production. This represents a saving of up to 2 million tons of virgin aggregate per year in the Czech Republic alone and up to 70 million tons of virgin aggregate per year in the EU as a whole and accompanying reduction of the carbon footprint resulting from the mining and transporting of the virgin aggregate.

The reasons for the above-mentioned maximum shares of the recycled aggregate set by the standard are particularly a lower strength of the filler, higher absorbability, higher deformation and lower durability.

The goal of the suggested invention is to eliminate the above-mentioned drawbacks in the production of composite materials bonded with hydraulic binder from a recycled aggregate produced from inert construction and demolition waste and limiting of its disposal in accordance with both Czech and European legislation, wherein a sufficient strength and durability of composite material bonded by hydraulic binder produced this way should be guaranteed.

### Summary of Invention

Drawbacks of prior art are eliminated to a large extent by a method of preparing a composite material bonded with hydraulic binder, wherein:
a) aggregate is prepared in an amount of at least 45 wt. % of the total weight of the - to be prepared - fresh composite material bonded with hydraulic binder, wherein this aggregate contains recycled aggregate from inert construction and demolition waste,
b) an active ingredient is then added to the aggregate, the active ingredient containing 40 to 60 wt. % of high-temperature fly ash and 60 to 40 wt. % of low-temperature fluid ash, wherein the sum of the content of high-temperature ash and low-temperature ash in the active ingredient is at least. 85 wt. % and wherein the active ingredient is added in an amount of 2 to 15 wt. % of the total weight of the - to be prepared - fresh composite material bonded with hydraulic binder,
   and cement is added in an amount of 4 to 25 wt. % of the total weight of the - to be prepared - fresh composite material bonded with hydraulic binder,
c) then the produced mixture is being mixed for a period of 5 to 150 s,
d) then water in an amount of 5 to 20 wt. % of the total weight of the - to be prepared - fresh composite material bonded with hydraulic binder is added to the mixture,
e) then the mixture produced in this way is being mixed for a period of 5 to 150 s.

According to an especially preferred embodiment, aggregate is prepared in an amount of 70 to 90 wt. %, or 70 to 89 wt. %, of the total weight for composite materials bonded with hydraulic binder and presenting lower strength classes; and aggregate is prepared in an amount of 50 to 70 wt. % of the total weight for composite materials bonded with hydraulic binder and presenting higher strength classes.

Also according to an especially preferred embodiment, the active ingredient is used in an amount of 2 to 4 wt. % for composite materials bonded with hydraulic binder and presenting lower strength classes, wherein the active ingredient preferably contains 40 to 45 wt. % of high temperature ash and 55 to 60 low temperature ash; the active ingredient is used in an amount of 8 to 13 wt. % for composite materials bonded with hydraulic binder and presenting higher strength classes, wherein the active ingredient preferably contains 55 to 60 wt. % of high temperature ash and 40 to 45 low temperature ash.

In step c) the mixture is being mixed 80 to 120 s, preferably.

In step d), water is added in an amount of 5 to 10 wt. % for composite materials bonded with hydraulic binder and presenting lower strength classes, in an amount of 15 to 20 wt. % for composite materials bonded with hydraulic binder and presenting higher strength classes.

In step e) the prepared mixture is being mixed for 80 to 120 s.

According to a preferred embodiment, the preparation of aggregate in step a) is carried out by mixing the recycled aggregate from inert construction and demolition waste and virgin aggregate for a period of up to 20 s.

The virgin aggregate makes up at most 50 % of the total weight of the aggregate.

Preferably, in step a) aggregate is prepared which contains recycled aggregate having a fraction of 0 to 16 mm or a fraction of 0 to 22 mm.

Also preferably, aggregate is prepared in step a) which contains recycled aggregate made up by a mixture of fractions 0 to 8 mm and 8 to 16 mm or by a mixture of fractions 0 to 8 mm and 8 to 22 mm with a mutual ratio of these fractions being 30:70 to 80:20.

Preferably, in step d) a plasticizer ingredient in an amount of 2 wt. % of the total weight of the binder is added.

Composite material bonded by a hydraulic binder, containing:
- aggregate which contains recycled aggregate from inert construction and demolition waste,
- an active ingredient in an amount of 2 to 15 wt. % of the total weight of a fresh composite material bonded by a hydraulic binder, wherein this active ingredient contains 40 to 60 wt. % of high-temperature fly ash and 60 to 40 wt. % of low-temperature fluid ash, wherein the sum of the content of high-temperature ash and low-temperature ash in the active ingredient is at least 85 wt. %,
- cement in an amount of 4 to 25 wt. % of the total weight of the fresh composite material bonded with hydraulic binder,
- water in an amount of 5 to 20 wt. % of the total weight of the fresh composite material bonded with hydraulic binder.

Preferably, the aggregate contains virgin aggregate in an amount of at most 50 wt. % of the total weight of the aggregate.

Preferably, the fraction of the recycled aggregate produced from inert construction and demolition waste is a fraction of 0 to 16 mm or a fraction of 0 to 22 mm.

The fraction of the recycled aggregate consists of the fractions 0 to 8 mm and 8 to 16 mm, or 0 to 8 mm and 8 to 22 mm, with a mutual ratio of these fractions of 30:70 to 80:20.

The composite material bonded with hydraulic binder preferably contains a superplasticizer ingredient in an amount of up to 2 wt. % of the total weight of the binder.

### Description of Embodiments

The following method of mixing and the following amounts of ingredients is employed for preparation of composite materials bonded with hydraulic binder with the use of inert construction and demolition waste: A recycled aggregate produced from an inert construction and demolition waste is mixed with 0 to 50 % of virgin aggregate of the total weight of the aggregate for a period of 0 to 20 s. The used recycled aggregate is preferably a fraction of 0 to 16 mm or a fraction of 0 to 22 mm. It is also possible to use a mixture of two recycled aggregate fractions of 0 to 8 mm and 8 to 16 mm or 0 to 8 mm and 8 to 22 mm with a mutual ratio of these fractions 30:70 to 80:20. The granularity of the used virgin aggregate preferably does not exceed a grain dimension Dₘₐₓ of 22 mm. Subsequently an active ingredient for composite materials made from secondary raw materials, eventually other ingredients, is added in an amount of 2 to 15 wt. % of the bulk weight of a fresh composite material bonded with hydraulic binder, then cement is added in an amount of 4 to 25 wt. % of the bulk weight of the fresh composite material bonded with hydraulic binder and the mixture is being mixed for a period of further 5 to 150 s. Subsequently water is added in an amount of 5 to 20 wt. % of the bulk weight of the fresh composite material bonded with hydraulic binder and a plasticizer ingredient is added in an amount of 0 to 2 wt. % of the total weight of the binder, wherein the produced mixture is mixed for a period of 5 to 150 s.

Said active ingredient for composite materials bonded with hydraulic binder and containing secondary raw materials is a new type of active fine-grain powder ingredient having pozzolanic and latently hydraulic properties and complies with the requirements for an ingredient II in accordance with ČSN EN 206+A2.

Conventional high-temperature power plant fly ash and fluid low-temperature ash is used as starting material for the production of the active ingredient.

The active ingredient for composite materials is added during mixing of input raw materials as a dry powder in an amount of 10 to 60 wt. % of the weight of cement CEM I, II or III (ČSN EN 197-1 ed. 2). An optimum dosage for particular composite materials bonded with hydraulic binder is experimentally determined based on granulometry, efficiency indices determined in accordance with ČSN EN 450-1, desired consistency, strength grade of the concrete, grade of effect of the environment in which the concrete will be used, type of cement used.

### Example 1

A recycled aggregate having a fraction of 0 to 22 mm and produced from inert construction and demolition waste, in the amount of 45 wt. % of the bulk weight of fresh composite material bonded with hydraulic binder, and
a small-sized virgin aggregate having a fraction of 0 to 4 mm in the amount of 19 wt. % of the bulk weight of the fresh composite material bonded with hydraulic binder,
   was mixed for 15 s and then the following ingredients were added:
Portland cement CEM I 42,5 R in the amount of 10 wt. % of the bulk weight of the fresh composite material bonded with hydraulic binder, and
an active ingredient in the amount of 8 wt. % of the bulk weight of the fresh composite material bonded with hydraulic binder,
   whereupon the mixture was mixed for 80 s and then the following ingredients were added to the mixture:
water in the amount of 18 wt. % of the bulk weight of the fresh composite material bonded with hydraulic binder,
a plasticizer ingredient in the amount of 0.24 wt. % of the bulk weight of the fresh composite material bonded with hydraulic binder,
   whereupon the mixture was mixed for another 80 s.

The active ingredient consisted of 45 % of a high-temperature fly ash and 55 % of a low-temperature fluid ash with a maximum grain size of 100 micrometres.

### Example 2

A recycled aggregate having a fraction of 0 to 22 mm and produced form inert construction and demolition waste, in the amount of 63 wt. % of the bulk weight of the fresh composite material bonded with hydraulic binder, and
Portland cement CEM I 42,5 R, in the amount of 15 wt. % of the bulk weight of the fresh composite material bonded with hydraulic binder, and
an active ingredient in the amount of 4 wt. % of the bulk weight of the fresh composite material bonded with hydraulic binder,
   was mixed for 120 s and then the following ingredients were added to this mixture
water in the amount of 17 wt. % of the bulk weight of the fresh composite material bonded with hydraulic binder,
a plasticizer ingredient in the amount of 0.34 wt. % of the bulk weight of the fresh composite material bonded with hydraulic binder,
   whereupon the mixture was mixed for another 100 s.

The active ingredient consisted of 50 wt. % of a high-temperature fly ash and 50 wt. % of a low-temperature fluid ash with a maximum grain size of 100 micrometres.

### Example 3

A recycled aggregate having a fraction of 0 to 22 mm produced from inert construction and demolition waste, in the amount of 86 wt. % of the bulk weight of the fresh composite material bonded with hydraulic binder,
Portland cement CEM I 42,5 R in the amount of 4 wt. % of the bulk weight of the fresh composite material bonded with hydraulic binder,
an active ingredient in the amount of 2 wt. % of the bulk weight of the fresh composite material bonded with hydraulic binder,
   was mixed for 120 s and then the following ingredients were added:
water in the amount of 8 wt. % of the bulk weight of the fresh composite material bonded with hydraulic binder,
   whereupon the mixture was mixed for another 120 s.

The active ingredient consisted of 40 wt. % of a high-temperature fly ash and 60 wt. % of a low-temperature fluid ash with a maximum grain size of 100 micrometres.

### Example 4

A recycled aggregate having a fraction of 0 to 22 mm produced from an inert construction and demolition waste, in the amount of 49 wt. % of a bulk weight of the fresh composite material bonded with hydraulic binder,
Portland cement CEM I 42,5 R in the amount of 22 wt. % of bulk weight of the fresh composite material bonded with hydraulic binder,
an active ingredient in the amount of 10 wt. % of the bulk weight of the fresh composite material bonded with hydraulic binder,
   was mixed for 90 s and then the following ingredients were added:
water in the amount of 19 wt. % of the bulk weight of the fresh composite material bonded with hydraulic binder, and
a plasticizer ingredient in the amount of 0.1 wt. % of the bulk weight of the fresh composite material bonded with hydraulic binder,
   whereupon the mixture was mixed for another 100 s.

The active ingredient consisted of 60 wt. % of a high-temperature fly ash and a 40 wt. % of a low-temperature fluid ash with a maximum grain size of 100 micrometres.

### Example 5

A recycled aggregate having a fraction of 0 to 22 mm produced from inert construction and demolition waste, in the amount of 36 wt. % of the bulk weight of the fresh composite material bonded with hydraulic binder,
a small-sized virgin aggregate having a fraction of 0 to 4 mm, in the amount of 15 wt. % of the bulk weight of the fresh composite material bonded with hydraulic binder,
   was mixed for 10 s and then the following ingredients were added:
Portland cement CEM I 42,5 R, in the amount of 18 wt. % of the bulk weight of the fresh composite material bonded with hydraulic binder,
an active ingredient in the amount of 13 wt. % of the bulk weight of the fresh composite material bonded with hydraulic binder, and
   whereupon the mixture was mixed for 60 s and then the following ingredients were added:
water in the amount of 18 wt. % of bulk weight of the fresh composite material bonded with hydraulic binder, and
a plasticizer ingredient in the amount of 0.05 wt. % of the bulk weight of the fresh composite material bonded with hydraulic binder,
   whereupon the mixture was mixed for another 120 s.

The active ingredient consisted 55 wt. % of high-temperature fly ash and 45 wt. % of low-temperature fluid ash with a maximum grain size of 100 micrometres.

### Industrial applicability

The technical solution of preparation of composite materials bonded with hydraulic binder, containing up to 100 % of recycled aggregate produced from inert construction and demolition waste allows for a production of composite materials bonded with hydraulic binder, characterized by properties comparable to composite materials bonded with a hydraulic binder and made from virgin aggregate according to corresponding ČSN and EN standards. At the same time, the production expense for a composite material bonded with hydraulic binder, produced in such a way, are significantly lower than in composite materials bonded with hydraulic binder made of virgin aggregate.

Composite materials bonded with hydraulic binder produced in this way save non-renewable resources of virgin aggregate, contribute to a significant reduction of the carbon footprint resulting from mining and transportation of virgin aggregate, increase the share of recycling and usage of construction waste and thus eliminate its deposition on landfills. In this way they strive to comply with stricter requirements of both Czech and European waste disposal legislation.

Although preferable embodiments have been described, it is clear that a person skilled in the art will readily discover other possible alternatives to these embodiments. The scope of protection is therefore not limited to these exemplifying embodiment but is rather given by the definition of the appended patent claims.

## Claims

1. Method of preparing a composite material bonded with hydraulic binder, wherein:
a) aggregate is prepared in an amount of at least 45 wt. % of the total weight of the - to be prepared - fresh composite material bonded with hydraulic binder, wherein this aggregate contains recycled aggregate from inert construction and demolition waste, **characterised in that**
b) an active ingredient is then added to the aggregate, the active ingredient containing 40 to 60 wt. % of high-temperature fly ash and 60 to 40 wt. % of low-temperature fluid ash, wherein the sum of the content of high-temperature ash and low-temperature ash in the active ingredient is at least. 85 wt. % and wherein the active ingredient is added in an amount of 2 to 15 wt. % of the total weight of the - to be prepared - fresh composite material bonded with hydraulic binder,
and cement is added in an amount of 4 to 25 wt. % of the total weight of the - to be prepared - fresh composite material bonded with hydraulic binder,
c) then the produced mixture is being mixed for a period of 5 to 150 s,
d) then water in an amount of 5 to 20 wt. % of the total weight of the - to be prepared - fresh composite material bonded with hydraulic binder is added to the mixture,
e) then the mixture produced in this way is being mixed for a period of 5 to 150 s.

2. Method according to claim 1, **characterised in that** the preparation of aggregate in step a) is carried out by mixing the recycled aggregate from inert construction and demolition waste and virgin aggregate for a period of up to 20 s.

3. Method according to claim 2, **characterised in that** the recycled aggregate makes up at least 50 % of the total weight of the aggregate.

4. Method according to any of claims 1 to 3, **characterised in that** in step a) aggregate is prepared which contains recycled aggregate having a fraction of 0 to 16 mm or a fraction of 0 to 22 mm.

5. Method according to any of claims 1 to 3, **characterised in that** in step a) aggregate is prepared which contains recycled aggregate made up by a mixture of fractions 0 to 8 mm and 8 to 16 mm or by a mixture of fractions 0 to 8 mm and 8 to 22 mm with a mutual ratio of these fractions being 30:70 to 80:20.

6. Method according to any of claims 1 to 5, **characterised in that** in step d) a superplasticizer ingredient in an amount of 2 wt. % of the total weight of the binder is added.

7. Method according to anyone of claims 1 to 6, **characterised in that** the active ingredient has a maximum grain size of 100 micrometres.

8. Composite material bonded by a hydraulic binder, containing:
- aggregate which contains recycled aggregate from inert construction and demolition waste, **characterised in that** it furthermore contains:
- an active ingredient in an amount of 2 to 15 wt. % of the total weight of a fresh composite material bonded by a hydraulic binder, wherein this active ingredient contains 40 to 60 wt. % of high-temperature fly ash and 60 to 40 wt. % of low-temperature fluid ash, wherein the sum of the content of high-temperature ash and low-temperature ash in the active ingredient is at least 85 wt. %,
- cement in an amount of 4 to 25 wt. % of the total weight of the fresh composite material bonded with hydraulic binder,
- water in an amount of 5 to 20 wt. % of the total weight of the fresh composite material bonded with hydraulic binder.

9. Composite material bonded with hydraulic binder according to claim 8, **characterised in that** the aggregate contains virgin aggregate in an amount of max. 50 wt. % of the total weight of the aggregate.

10. Composite material bonded with hydraulic binder according to claim 8 or 9, **characterised in that** the fraction of the recycled aggregate produced from inert construction and demolition waste is a fraction of 0 to 16 mm or a fraction of 0 to 22 mm.

11. Composite material bonded with hydraulic binder according to claim 8 or 9, **characterised in that** the fraction of the recycled aggregate consists of the fractions 0 to 8 mm and 8 to 16 mm, or 0 to 8 mm and 8 to 22 mm, with a mutual ratio of these fractions of 30:70 to 80:20.

12. Composite material bonded with hydraulic binder according to anyone of claims 8 to 11, **characterised in that** it contains a superplasticizer ingredient in an amount of up to 2 wt. % of the total weight of the binder.

13. Composite material bonded with hydraulic binder according to anyone of claims 8 to 12, **characterised in that** the active ingredient has maximum grain size of 100 micrometres.
